# EUROPÄISCHE PATENTSCHRIFT

(11) **EP 1 438 778 B1**
(45) Veröffentlichungstag und Bekanntmachung des Hinweises auf die Patenterteilung: **18.05.2011**
(21) Anmeldenummer: 02764537.3
(22) Anmeldetag: 06.08.2002
(51) Int. Cl.: H02H 7/085

(54) **VERFAHREN ZUR ÜBERWACHUNG DES REVERSIERVORGANGS VON ELEKTRISCH BETÄTIGBAREN AGGREGATEN**
METHOD FOR MONITORING THE REVERSING PROCESS OF ELECTRICALLY ACTUATABLE UNITS
PROCEDE DE CONTROLE D'UN PROCESSUS REVERSIBLE DE GROUPES COMMANDES ELECTRIQUEMENT

(30) Priorität: 17.10.2001 DE 10151184
(43) Veröffentlichungstag der Anmeldung: 21.07.2004
(73) Patentinhaber: ROBERT BOSCH GMBH, 70442 Stuttgart (DE)
(72) Erfinder: KNAB, Norbert, 77767 Appenweier (DE); KAHLES, Patric, 77815 Buehl (DE)
(86) Internationale Anmeldenummer: PCT/DE2002/002880
(87) Internationale Veröffentlichungsnummer: WO 2003/038968

(56) Entgegenhaltungen:
- US-A- 6 104 156

## Beschreibung

### Technisches Gebiet

Moderne Kraftfahrzeuge sind mit Komfortsystemen ausgestattet, wie beispielsweise Fenster- oder Dachantrieben. Diese ermöglichen ein automatisches Öffnen und Schließen der Fenster und des Schiebedaches. Der manuelle Betrieb erfolgt dabei zum Beispiel mit Hilfe von Wippschaltem mit drei Schaltpositionen. Eine Schaltposition aktiviert den Öffnungsvorgang, eine den Schließvorgang und eine weitere bewirkt das Abschalten des Antriebsmotors, der die jeweilige Verstellung bewirkt.

### Stand der Technik

DE-A 198 09 628 bezieht sich auf eine Antriebseinrichtung zum Bewegen eines Bauteils wie zum Beispiel einer Fensterscheibe, eines Sitzes oder eines Schiebedaches von einem Kraftfahrzeug. Die Antriebseinrichtung hat einen bürstenlosen und dabei von einer elektronischen Kommutierungsschaltung versorgbaren Elektromotor mit beispielsweise drei Feldspulenpaaren. Eine Sicherheitsschaltung schaltet den Elektromotor aus, wenn das bewegte Bauteil z.B. ein Körperteil einer Person einzuklemmen beginnt. Die Sicherheitsschaltung reagiert auf die Frequenz von Signalen, die aus Strom- oder Spannungsschwankungen in zumindest einer Motorstromleitung gewonnen werden.

DE-A 199 01 855 hat ein Verfahren und eine Vorrichtung zum Betreiben eines Stellantriebs in einem Kraftfahrzeug zum Gegenstand. Das Verfahren besteht u.a. darin, dass eine von dem Verstellantrieb ausgeübte Betätigungskraft gemessen wird, diese Betätigungskraft mit einer Grenzkraft verglichen wird und ein Reversieren des Verstellantriebs erfolgt, wenn die Grenzkraft überschritten wird (Schließkraftbegrenzung).

DE-A 30 34 118 betrifft ein Verfahren zur elektronischen Betätigung und Überwachung des Öffnungs- bzw. Schließzyklusses von elektrisch betätigbaren Aggregaten, wie beispielsweise Fensterheber und elektrischen Schiebedächern, insbesondere von Kraftfahrzeugen, sowie eine elektrische Schaltungsanordnung zur Durchführung des Verfahrens. Ein an das gleichspannungsgespeiste Bordnetz angeschlossener elektrischer Stelltrieb ist über elektrische Schalter, insbesondere Tastschalter betätigbar. Zur Vermeidung von Sicherheitsmängeln (Einklemmen gefährdeter Körperteile, wie Hals, Kopf, Finger usw.) wird beim Öffnen des Aggregates der zurückgelegte Weg elektronisch erfasst, beim Schließen des Aggregates der erfasste Öffnungsweg mit dem zurückgelegten Schließweg elektronisch verglichen, beim Schließen die Drehzahl des elektrischen Stelltriebes erfasst und mit einem konstanten Richtwert elektronisch verglichen. Bei einer Verminderung der Drehzahl während des Schließvorgangs wird der Stelltrieb abgeschaltet. Dadurch sollen Sicherheitsmängel des elektrischen Systems wie beispielsweise das Einklemmen gefährdeter Körperteile beim Schließen der elektrisch betätigbaren Aggregate abgebaut werden.

Im Stande der Technik erfolgt ferner ein Abschalten des Verstellantriebs im Falle einer Blockierung eines der elektrisch betätigbaren Aggregate, um eine mechanische oder elektrische Überlastung des Verstellantriebs zu vermeiden. Das Abschalten wird nach einer vorgegebenen Blockierabschaltungszeit, in der das Aggregat in Öffnungs- oder Schließrichtung blockiert ist, ausgelöst. Als Blockierabschaltungszeit wird üblicherweise eine Zeit zwischen 100 ms und 500 ms vorgegeben.

Diese Blockierabschaltung kann sich jedoch nachteilig auswirken, wenn ein Reversieren des Verstellantriebs (zum Beispiel aufgrund eines Einklemm-Notfalls) angesteuert wird, jedoch wegen kurzzeitiger Spannungseinbrüche der Betriebsspannung nicht möglich ist. Dauern die Spannungseinbrüche länger an als die Blockierabschaltungszeit, so schaltet die Auswerteelektronik wie bei einer Blockierung den Antrieb ab. Ein eingeklemmtes Körperteil wird demnach nicht mehr freigegeben.

Ein Reversieren aus dem Schließ- in den Öffnungsvorgang des Verstellantriebs ist beispielsweise dann nicht möglich, wenn die Betriebsspannung (zum Beispiel die Bordnetzspannung eines Kraftfahrzeuges) kurzzeitig unter die Relaisanzugsspannung desjenigen Relais sinkt, das zum Schalten des Öffnungsvorgangs dient. Unter der Relaisanzugsspannung ist in diesem Zusammenhang der Wert der kleinsten Spannung zu verstehen, die ein Relais zum Schalten bringt. Sie ist u.a. abhängig von der Zusatzbeschaltung (zum Beispiel Schutzdiode vor der Relaiswicklung), der Umgebungstemperatur, der Eigenerwärmung und dem Innenwiderstand des Relaistreibers und liegt typischerweise zwischen 8 und 10 V. Die Relaishaltespannung, die zum Halten des geschalteten Relais in der Schaltstellung benötigt wird, ist hingegen kleiner als die Relaisanzugsspannung. Eine niedrige Betriebsspannung (Bordnetzspannung) kann folglich groß genug sein, um die Relaishaltespannung zu übersteigen und gleichzeitig kleiner sein als die Relaisanzugsspannung. In diesem Falle ist es beispielsweise möglich, das Relais zum Schalten des Schließvorgangs in der Schließschaltstellung zu halten, ein Reversieren des Verstellantriebs durch Schalten des Relais für den Öffnungsvorgang jedoch nicht, da die notwendige Relaisanzugsspannung unterschritten wird. Folglich verstellt sich das zu betätigende Aggregat nicht in Öffnungsrichtung. Eine mögliche Folge ist dann, wie oben beschrieben, das Abschalten des Antriebs nach Ablauf der Blockierabschaltungszeit.

### Darstellung der Erfindung

Die erfindungsgemäße Lösung hat den Vorteil, dass auch im Falle eines kurzfristigen Betriebsspannungseinbruchs die automatische Freigabe eines eingeklemmten Körperteils gewährleistet ist. Folglich ergibt sich ein verbessertes Sicherheitsverhalten von elektrisch betätigbaren Aggregaten bei niedriger Betriebsspannung. Vorteilhaft ist weiterhin, dass keine zusätzlichen Sensoren zur Durchführung des erfindungsgemäßen Verfahrens benötigt werden, wenn bereits Sensoren zur Positionsmessung für die Aggregate vorhanden sind. Ferner dient das erfindungsgemäße Verfahren zur indirekten Relaiskontrolle bei jedem Reversierschaltvorgang von elektrisch betätigbaren Aggregaten, nicht nur im Einklemmfall. Unter elektrisch betätigbaren Aggregaten sind insbesondere fremdkraftangetriebene Fensterscheiben und Schiebedächer von Kraftfahrzeugen zu verstehen und beispielsweise auch elektrisch verstellbare Schiebetüren, Sitze, Verdecke und Hauben.

Diese Vorteile werden erfindungsgemäß durch ein Verfahren zur Überwachung und Steuerung von Reversiervorgängen bei elektrisch betätigbaren Aggregaten erreicht, wobei eine Betätigungskraft zum Verstellen eines elektrisch betätigbaren Aggregats durch einen Stellantrieb ausübbar ist und eine Sicherheitsschaltung den Stellantrieb automatisch nach einer für eine Verstellung vorgegebenen Blockierabschaltungszeit abschaltet, wenn trotz angesteuertem Verstellantrieb keine Verstellung erfolgt. Erfindungsgemäß hat ein ausgelöster Reversiervorgang vorübergehend eine Verlängerung der vorgegebenen Blockierabschaltungszeit von einer im Normalbetrieb vorgegebenen kurzen Blockierabschaltungszeit t₁ auf eine längere Blockierabschaltungszeit t₂ zur Folge.

Unter Reversiervorgängen sind dabei Vorgänge zu verstehen, bei denen eine angesteuerte Aktion umgekehrt wird. Beispielsweise soll ein Öffnungsvorgang einer fremdkraftbetriebenen Fensterscheibe in einem Kraftfahrzeug abgebrochen und ein Schließvorgang aktiviert werden oder umgekehrt ein Schließvorgang abgebrochen und ein Öffnungsvorgang aktiviert.

Stellantriebe können zum Beispiel bei fremdkraftbetriebenen Fensterscheiben in Kraftfahrzeugen eines von zwei verschiedenen Systemen enthalten, ein Gelenkgetriebe oder ein Seilzuggetriebe. Bei dem Gelenkgetriebe treibt ein Antriebsmotor (Elektromotor) über ein Stirnrad ein Zahnsegment an, das mit dem Gelenkgetriebe verbunden ist. Bei dem Seilzuggetriebe treibt der Antriebsmotor eine Seilzuganlage an. Unter einem Stellantrieb sollen in diesem Zusammenhang ein Antriebsmotor und ein Getriebe zusammengefasst werden.

Die Sicherheitsschaltung schaltet den Stellantrieb automatisch ab, wenn eine Blockierung des elektrisch betätigbaren Aggregats erkannt wird, die länger als eine vorgegebene Blokkierabschaltungszeit andauert. Eine Blockierung wird dann erkannt, wenn der Verstellantrieb angesteuert wird und trotzdem keine Positionsänderung des elektrisch betätigbaren Aggregats detektiert wird. Beispielsweise wird eine Blockierung erkannt, wenn über ein Bedienelement (z.B. Kippschalter) der Steuerelektronik die gewünschte Betriebsart, wie zum Beispiel das Schließen eines elektrischen Schiebedaches in einem Kraftfahrzeug mitgeteilt wird und dann innerhalb einer Blockierabschaltungszeit (z.B. 500 ms) keine Positionsänderung des Schiebedachs in Schließrichtung detektiert wird. Die Ansteuerung des Verstellantriebs kann dabei nicht nur über ein Bedienelement manuell erfolgt sein, sondern auch durch eine Steuerelektronik, beispielsweise bei einer Schließkraftbegrenzung, bei der ein Reversieren des Verstellantriebs ausgelöst wird, sobald ein Grenzwert der Schließkraft überschritten wird.

Erfindungsgemäß erfolgt bei einem ausgelösten Reversiervorgang vorübergehend eine Verlängerung der vorgegebenen Blockierabschaltungszeit von einer im Normalbetrieb vorgegebenen kurzen Blockierabschaltungszeit t₁ auf eine längere Blockierabschaltungszeit t₂. Die kurze Blockierabschaltungszeit t₁ ist im Normalbetrieb vorgegeben, damit bei einer Blockierung eine mechanische oder elektrische Überlastung des Stellantriebs verhindert wird. Sie hat aber den Nachteil, dass bei kurzen Spannungseinbrüchen, die eine Ansteuerung des Verstellantriebs verhindern (zum Beispiel weil eine Relaisanzugsspannung unterschritten wird), bereits eine Blockierung festgestellt und der Verstellantrieb durch die Sicherheitsschaltung abgeschaltet wird. Dies ist insbesondere bei Reversiervorgängen gefährlich, da sie eventuell aufgrund eines Notfalls (Einklemmen eines Körperteils) ausgelöst werden. Wenn in einem solchen Notfall keine Verstellung in der Umkehrrichtung innerhalb der kurzen Blockierabschaltungszeit erfolgt (weil kurzzeitig die Betriebsspannung zu niedrig ist), wird der Verstellantrieb abgeschaltet. Es besteht folglich erhöhte Verletzungsgefahr für die Person mit dem eingeklemmten Körperteil, da sie nun auch nicht mehr verzögert freigegeben wird, sobald die Betriebsspannung wieder ausreichend hoch ist. Durch das Vorgeben einer längeren Blockierabschaltungszeit t₂ bei der Einleitung eines Reversiervorgangs wird dieses Problem gelöst, da eine kurzzeitige Blockierung des Verstellantriebs nun noch keine endgültige Abschaltung des Verstellantriebs zur Folge hat. Kurzzeitige Blockierungen wie zum Beispiel durch kurze Einbrüche der Betriebsspannung werden durch eine längere Blockierabschaltungszeit t₂ überbrückt.

Liegt die kurze Blockierabschaltungszeit t₁ beispielsweise bei fremdkraftbetriebenen Fensterscheiben in Kraftfahrzeugen zwischen 100 ms und 500 ms, so könnte für die längere Blockierabschaltungszeit t₂ zum Beispiel ein Wert zwischen 10 s und 50 s vorgegeben werden.

Die Verlängerung Blockierabschaltungszeit von t₁ auf t₂ darf jedoch nur vorübergehend erfolgen, da es sonst zu einer Überbelastung des Verstellantriebs zum Beispiel an dem tatsächlichen mechanischen Anschlag des elektrisch betätigbaren Aggregats kommen kann.

### Zeichnung

Anhand der Zeichnung wird die Erfindung nachstehend näher erläutert.

Es zeigt:
- Figur 1: ein Flussdiagramm, das den Ablauf eines erfindungsgemäßen Verfahrens dar- stellt, wobei die Blockierabschaltungszeit bei jedem Reversiervorgang vor- übergehend erhöht wird,
- Figur 2: ein Flussdiagramm, das den Ablauf eines erfindungsgemäßen Verfahrens dar- stellt, wobei die Blockierabschaltungszeit nur dann vorübergehend erhöht wird, wenn ein Reversiervorgang eingeleitet wird und die Betriebsspannung einen Grenzwert unterschreitet und
- Figur 2a: ein Flussdiagramm, das den Ablauf eines weiteren erfindungsgemäßen Verfah- rens darstellt, wobei die Blockierabschaltungszeit nur dann vorübergehend er- höht wird, wenn ein Reversiervorgang eingeleitet wird und die Betriebsspan- nung einen Grenzwert unterschreitet.

### Ausführungsvarianten

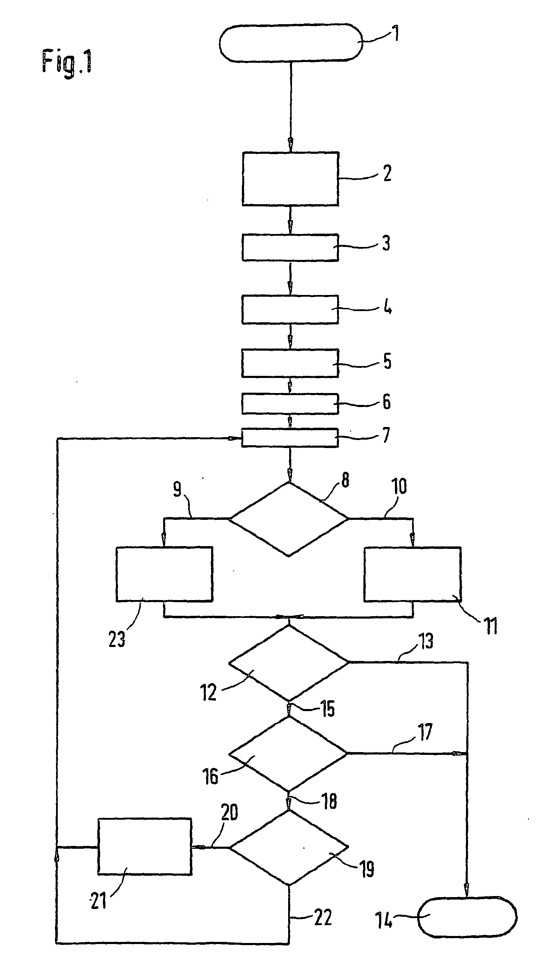

Das Flussdiagramm in Figur 1 stellt eine Ausführungsvariante des erfindungsgemäßen Verfahrens dar, wobei die Blockierabschaltungszeit bei jedem Reversiervorgang vorübergehend erhöht wird.

Bei der dargestellten bevorzugten Ausführungsform der vorliegenden Erfindung entspricht der Reversiervorgang einer Umkehrung eines Schließvorgangs in einen Öffnungsvorgang. Das Aktivieren des Reversiervorgangs 1 kann dabei zum Beispiel die Freigabe eines bei dem Schließvorgang eingeklemmten Körperteils durch den Öffnungsvorgang bezwecken. Das Aktivieren des Reversiervorgangs 1 hat eine Verlängerung der vorgegebenen Blokkierabschaltungszeit 2 von t₁ auf t₂ zur Folge. Anschließend wird eine Bestimmung und Speicherung der aktuellen Position 3 des elektrisch betätigbaren Aggregats durchgeführt, eine Sollposition berechnet 4 und ein Blockierzähler auf die vorgegebene Blockierabschaltungszeit gesetzt 5.

Bei einer bevorzugten Ausführungsform der vorliegenden Erfindung wird die aktuelle Position des elektrisch betätigbaren Aggregats mit mindestens einem Positionssensor ermittelt. Die Positionsbestimmung 3 kann beispielsweise durch Inkrementalsensoren, z.B. mittels Hall-Sensoren, realisiert werden. Vorteilhaft ist dabei die Verwendung bereits vorhandener Positionssensoren, so dass keine zusätzlichen Kosten zu der Durchführung des erfindungsgemäßen Verfahrens anfallen.

Bei dieser in Figur 1 dargestellten bevorzugten Ausführungsform der vorliegenden Erfindung wird die mit dem Positionssensor ermittelte aktuelle Position des elektrisch betätigbaren Aggregats beim Auslösen des Reversiervorgangs 1 als Umschaltposition gespeichert. Diese gespeicherte Umschaltposition dient im weiteren erfindungsgemäßen Verfahren als Vergleichswert, um zu ermitteln, ob seit dem Aktivieren des Reversiervorgangs 1 eine definierte Positionsänderung erfolgt ist.

Bei der Berechnung der Soll-Endposition 4 soll diejenige Position des elektrisch betätigbaren Aggregats ermittelt werden, die nach dem Aktivieren des Reversiervorgangs 1 durch die Verstellung erreicht werden soll. Die Soll-Endposition kann beispielsweise diejenige Position des elektrisch betätigbaren Aggregats sein, bei der es vollständig geöffnet ist oder bei der die Freigabe eines eingeklemmten Körperteiles mit Sicherheit gewährleistet wäre.

Bei einer bevorzugten Ausführungsform der vorliegenden Erfindung läuft die vorgegebene Blockierabschaltungszeit auf einem Blockierzähler ab. Der Blockierzähler wird nach dem Aktivieren des Reversiervorgangs 1 in dem in Figur 1 dargestellten erfindungsgemäßen Verfahren auf die längere Blockierabschaltungszeit t₂ gesetzt. Im Laufe des erfindungsgemäßen Verfahrens wird der Blockierzähler um definierte Zeiteinheiten vermindert. Erreicht der Blockierzähler die Null, so ist die vorgegebene Blockierabschaltungszeit abgelaufen.

Der nächste Schritt in dem erfindungsgemäßen Verfahren ist das Aktivieren des Öffnungsvorgangs 6. Das Aktivieren erfolgt dabei zum Beispiel durch das Schalten von mindestens einem Relais. Dadurch soll der Stellantrieb so angesteuert werden, dass er eine Betätigungskraft zum Verstellen des elektrisch betätigbaren Aggregats in Öffnungsrichtung ausübt.

Anschließend erfolgt eine erneute Bestimmung der aktuellen Position 7 des elektrisch angetriebenen Aggregats mittels des mindestens einen Positionssensors. Diese Positionsbestimmung 7 nach dem Aktivieren des Öffnungsvorgangs 6 dient als Grundlage für die Abfrage, ob eine Positionsänderung stattgefunden hat 8. Eine positive Antwort auf diese Abfrage 8 (Positionsänderung ist erfolgt 9) ergibt sich, wenn die bei der Positionsbestimmung 7 ermittelte aktuelle Position (in Öffnungsrichtung) abweicht von der bei der Positionsbestimmung 3 ermittelten und gespeicherten Umschaltposition. Eine negative Antwort (Positionsänderung ist nicht erfolgt 10) ergibt sich, wenn beide Positionsbestimmungen 3, 7 dieselbe Position ergeben haben.

Bei einer negativen Antwort auf Abfrage 8 (Positionsänderung ist nicht erfolgt 10) könnte eine Blockierung des elektrisch betätigbaren Aggregats vorliegen. Daher wird der Blokkierzähler dekrementiert 11, also um eine definierte Zeiteinheit vermindert. Bei einer positiven Antwort auf Abfrage 8 (Positionsänderung ist erfolgt 9) wird der Blockierzähler auf die aktuell vorgegebene Blockierabschaltungszeit gesetzt (23). Anschließend folgt eine Abfrage, ob der Blockierzähler auf Null steht 12. Dies würde bedeuten, dass die Blockierabschaltungszeit abgelaufen wäre. Im Falle einer positiven Antwort (Blockierzähler hat Null erreicht 13) folgt die Abschaltung des Verstellantriebs (durch eine Sicherheitsschaltung) und damit das Beenden des Öffnungsvorgangs 14. Dies dient insbesondere zum Schutz des Verstellantriebs vor Überlastung. Im Falle einer negativen Antwort auf Abfrage 12 (Blockierzähler hat nicht Null erreicht 15) folgt eine weitere Abfrage 16, ob das elektrisch betätigbare Aggregat die in Schritt 4 berechnete Soll-Endposition erreicht hat. Eine positive Antwort auf diese Abfrage 16 (Soll-Endposition erreicht 17) ergibt sich, wenn die in Schritt 7 ermittelte aktuelle Position der in Schritt 4 berechneten Soll-Endposition entspricht. Dann hat das elektrisch betätigbare Aggregat die gewünschte Position erreicht und es folgt das Beenden des Öffnungsvorgangs 14 (Abschalten des Verstellantriebs). Eine negative Antwort auf die Abfrage 16 (Soll-Endposition nicht erreicht 18) bedeutet, dass noch eine weitere Verstellung des elektrisch betätigbaren Aggregats zum Erreichen der Soll-Endposition notwendig ist. Dies hat zur Folge, dass das erfindungsgemäße Verfahren fortgesetzt wird mit einer weiteren Abfrage 19.

In einer bevorzugten Ausführungsform der vorliegenden Erfindung wird die vorgegebene Blockierabschaltungszeit auf die kurze Blockierabschaltungszeit t₁ gesetzt, falls mit dem Positionssensor innerhalb der vorgegebenen Blockierabschaltungszeit t₁ oder t₂ eine Verstellung von der Umschaltposition aus in der durch den Reversiervorgang angestrebten Richtung ermittelt wird.

In einer besonders bevorzugten Ausführungsform der vorliegenden Erfindung wird die vorgegebene Blockierabschaltungszeit auf die kurze Blockierabschaltungszeit t₁ gesetzt, falls die mit dem Positionssensor innerhalb der vorgegebenen Blockierabschaltungszeit t₁ oder t₂ ermittelte Verstellung in der durch den Reversiervorgang angestrebten Richtung gleich groß oder größer ist als eine definierte Sollverstellung ΔX.

Diese zwei Ausführungsformen der vorliegenden Erfindung können durch die Abfrage 19 und die anschließende Handlung 20 in dem in Figur 1 dargestellten erfindungsgemäßen Verfahren verwirklicht werden. In Abfrage 19 wird entschieden, ob eine sichere Verstellung erfolgt ist. Dies würde im Falle der ersten oben erläuterten bevorzugten Ausführungsform der vorliegenden Erfindung bedeuten, dass sich beim Vergleich der in Verfahrensschritt 7 bestimmten aktuellen Position mit der in Schritt 3 bestimmten Umschaltposition ergibt, dass eine Verstellung in Öffnungsrichtung erfolgt ist. Im Falle der oben erläuterten besonders bevorzugten Ausführungsform der vorliegenden Erfindung würde eine sichere Verstellung erkannt, wenn die Differenz aus aktueller Position und Umschaltposition eine definierte Sollverstellung ΔX erreicht oder überstiegen hätte.

Bei einer positiven Antwort 20 auf die Abfrage 19, ob eine sichere Verstellung erfolgt ist, folgt ein Rücksetzen der vorgegebenen Blockierabschaltungszeit auf die kurze Blockierabschaltungszeit t₁ 21. Bei einer negativen Antwort 22 auf die Abfrage 19, ob eine sichere Verstellung erfolgt ist, bleibt die Blockierabschaltungszeit unverändert.

Nach dem Zurücksetzen 21 (bei positiver Antwort 20) oder dem Gleichlassen (bei negativer Antwort 22) der Blockierabschaltungszeit folgt eine Wiederholung von Schritt 7, der Positionsbestimmung. Dadurch entsteht eine Schleife, die so lange durchlaufen wird, bis der letzte Verfahrensschritt 14, das Beenden des Öffnungsvorgangs (Abschalten des Stellantriebs) erreicht wird.

Beim Auftreten eines Notfalls durch Einklemmen eines Körperteils läuft das in Figur 1 dargestellte erfindungsgemäße Verfahren wie folgt ab:
Aufgrund des beim Schließen des elektrisch betätigbaren Aggregats eingeklemmten Körperteils wird ein Reversiervorgang eingeleitet 1. Dies kann zum Beispiel durch die manuelle Betätigung eines Bedienelementes oder aber automatisch durch die Schließkraftbegrenzung geschehen. Daraufhin wird die Blockierabschaltungszeit auf t₂ verlängert 2, die aktuelle Position des elektrisch betätigbaren Aggregats bestimmt und als Umschaltposition gespeichert 3, die Soll-Rücklaufposition berechnet 4, der Blockierzähler auf die Blockierabschaltungszeit t₂ gesetzt 5 und der Öffnungsvorgang aktiviert 6. Anschließend wird erneut die aktuelle Position des elektrisch betätigbaren Aggregats bestimmt 7, die bei der Abfrage 8, ob eine Positionsänderung erfolgt ist, benötigt wird. Falls sich das elektrisch betätigbare Aggregat seit dem Aktivieren des Öffnungsvorgangs 6 nicht bewegt hat, beispielsweise aufgrund eines kurzfristigen Betriebsspannungseinbruchs, der ein Schalten des für den Öffnungsvorgang notwendigen Relais verhindert, folgt eine Dekrementierung des Blockierzählers 11. Die Abfrage 12, ob der Blockierzähler auf Null steht, wird nach dem ersten Dekrementieren 11 mit "nein" beantwortet, so dass das erfindungsgemäße Verfahren mit der Abfrage 16, ob die Sollposition erreicht wurde, fortgesetzt wird. Diese Abfrage 16, ebenso wie die anschließende Abfrage 19, ob eine sichere Verstellung erfolgt ist, wird in diesem Falle eine negative Antwort erhalten, so dass nun erneut eine Positionsbestimmung 7 durchgeführt wird.

Falls bei einem Durchlauf dieser Schleife Abfrage 8 positiv beantwortet wird 9, beispielsweise weil die Betriebsspannung wieder angestiegen ist, so wird Blockierzähler auf die aktuell vorgegebene Blockierabschaltungszeit gesetzt 23. Falls durch die erfolgte Positionsänderung die in Schritt 4 berechnete Sollposition erreicht wurde, wird nach Abfrage 16 der Öffnungsvorgang beendet 14 und damit auch das Durchlaufen der Schleife abgebrochen. Das eingeklemmte Körperteil ist befreit worden. Wurde die Sollposition noch nicht erreicht, so folgt Abfrage 19. Bei einer erfolgten sicheren Verstellung 20, zum Beispiel wenn die Positionsänderung größer ist als eine definierte Sollverstellung, die eine Freigabe des eingeklemmten Körperteils gewährleisten soll, so wird die Blockierabschaltungszeit wieder auf die kürzere t₁ zurückgesetzt 21. In Schritt 23 wird die kürze Blockierabschaltungszeit von dem Blockierzähler übernommen. Dies hat den Vorteil, dass bei einer möglicherweise folgenden wirklichen Blockierung des elektrisch betätigbaren Aggregats oder auch des Stellantriebs der Stellantrieb nun wieder nach der kurzen Blockierabschaltungszeit abgeschaltet wird, so dass keine Überlastung auftreten kann.

Im Falle einer länger andauernden Blockierung des elektrisch betätigbaren Aggregats wird das in Figur 1 dargestellte erfindungsgemäße Verfahren nach mehrmaligem Durchlaufen der Schleife nach der Abfrage 12 abgebrochen 14, da der Blockierzähler dann die Null erreicht hat 13.

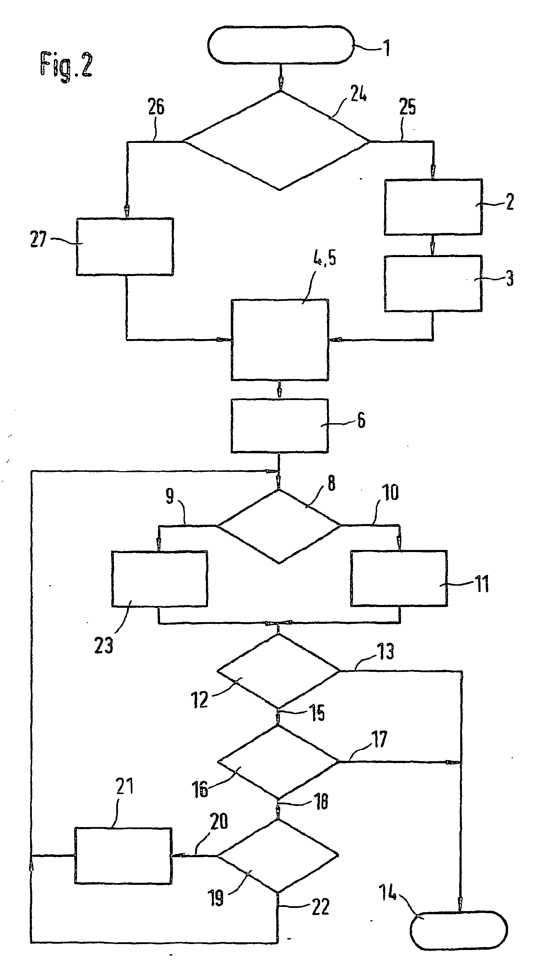

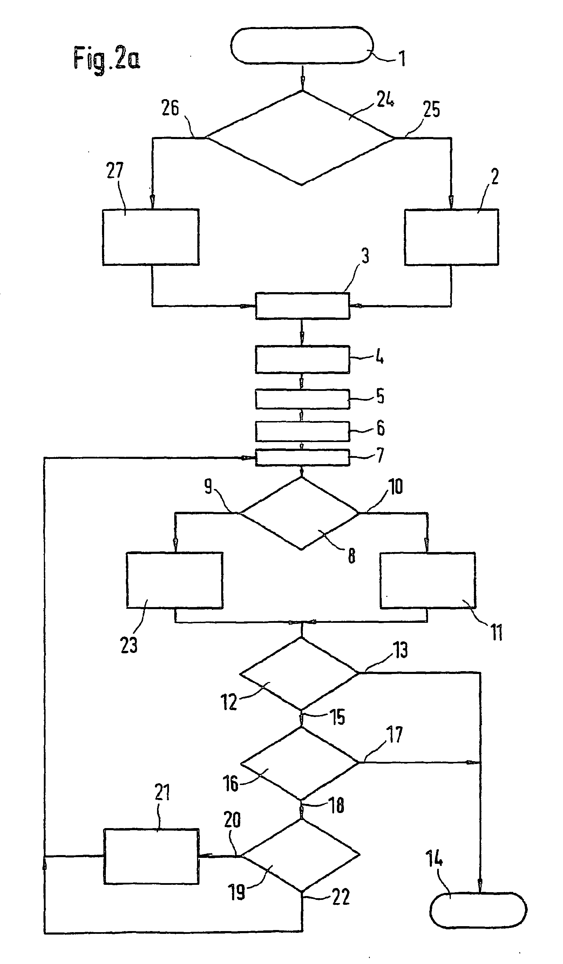

Figur 2 und Figur 2a zeigen je ein Flussdiagramm zu einem erfindungsgemäßen Verfahren, wobei die Blockierabschaltungszeit nur dann vorübergehend erhöht wird, wenn ein Reversiervorgang eingeleitet wird und die Betriebsspannung einen Grenzwert unterschreitet.

In einer Ausführungsform der vorliegenden Erfindung erfolgt eine Verlängerung der vorgegebenen Blockierabschaltungszeit von einer im Normalbetrieb vorgegebenen kurzen Blockierabschaltungszeit t₁ auf eine längere Blockierabschaltungszeit t₂, wenn eine Betriebsspannung, die zur Ansteuerung des Reversiervorgangs benötigt wird, einen vorgegebenen Grenzwert unterschreitet.

In einer bevorzugten Ausführungsform der vorliegenden Erfindung erfolgt eine Verlängerung der vorgegebenen Blockierabschaltungszeit von einer im Normalbetrieb vorgegebenen kurzen Blockierabschaltungszeit t₁ auf eine längere Blockierabschaltungszeit t₂ nur dann, wenn eine Betriebsspannung zum Schalten des Stellantriebs mit Hilfe mindestens eines Relais in einem Bereich um die Relaisanzugsspannung des mindestens einen Relais liegt.

In einer besonders bevorzugten Ausführungsform der vorliegenden Erfindung erfolgt eine Verlängerung der vorgegebenen Blockierabschaltungszeit von einer im Normalfall vorgegebenen kurzen Blockierabschaltungszeit t₁ auf eine längere Blockierabschaltungszeit t₂ nur dann, wenn eine Betriebsspannung zum Schalten des Stellantriebs mit Hilfe mindestens eines Relais kleiner ist als die Relaisanzugsspannung.

Figur 2 zeigt den Ablauf eines erfindungsgemäßen Verfahrens in einer dieser drei Ausführungsformen. Nach dem Aktivieren des Reversiervorgangs 1 folgt eine Abfrage 24, ob die Betriebsspannung einen definierten Grenzwert unterschreitet. Bei diesem Grenzwert kann es sich beispielsweise um die Relaisanzugsspannung handeln, die als Mindestspannung zum Schalten des Relais für den Öffnungsvorgang benötigt wird. Der Grenzwert kann aber auch über der Relaisanzugsspannung bei einer niedrigen Betriebsspannung liegen, so dass schon im Bereich unterhalb der niedrigen Betriebsspannung die Abfrage 24 eine positive Antwort 25 (dass die Betriebsspannung unter dem Grenzwert liegt) empfängt. Eine positive Antwort 25 verursacht eine Verlängerung 2 der Blockierabschaltungszeit auf t₂ und eine Bestimmung und ein Abspeichern 3 der Umschaltposition. Eine negative Antwort 26 (Betriebsspannung liegt nicht unter dem Grenzwert) hat zur Folge, dass die Blockierabschaltungszeit auf die kurze Blockierabschaltungszeit t₁ gesetzt wird 27.

Anschließend wird das erfindungsgemäße Verfahren fortgesetzt mit der Berechnung der Sollposition 4, dem Setzen des Blockierzählers 5 usw. (wie oben bezüglich Figur 1 beschrieben).

Figur 2a zeigt den Ablauf eines weiteren erfindungsgemäßen Verfahrens in einer der drei oben genannten Ausführungsformen. Nach dem Aktivieren des Reversiervorgangs 1 folgt ebenfalls eine Abfrage 24, ob die Betriebsspannung einen definierten Grenzwert unterschreitet. Eine positive Antwort 25 verursacht eine Verlängerung 2 der Blockierabschaltungszeit auf t₂ Eine negative Antwort 26 (Betriebsspannung liegt nicht unter dem Grenzwert) hat zur Folge, dass die Blockierabschaltungszeit auf die kurze Blockierabschaltungszeit t₁ gesetzt wird 27. Anschließend wird das erfindungsgemäße Verfahren fortgesetzt mit der Positionsbestimmung und -speicherung 3, der Berechnung der Sollposition 4 usw. (wie oben bezüglich Figur 1 beschrieben).

Das in Figur 2 dargestellte erfindungsgemäße Verfahren unterscheidet sich darin von dem in Figur 2a dargestellten erfindungsgemäßen Verfahren, dass die Positionsbestimmung und -speicherung 3 nur in dem Falle durchgeführt wird, in dem Abfrage 24 eine positive Antwort 25 erhält und nicht in jedem Falle. Die Abfrage 19, ob eine sichere Verstellung erfolgt ist, muss daher ausgeblendet werden, wenn Abfrage 24 eine negative Antwort 26 erhalten hat und somit Schritt 3 nicht durchgeführt wurde, da zur Entscheidung dieser Abfrage 19 eine in Schritt 3 gespeicherte Umschaltposition benötigt wird. Bei einem Ausblenden der Abfrage 19 wird das erfindungsgemäße Verfahren nach einer negativen Antwort 18 auf Abfrage 16 automatisch mit Abfrage 8 fortgesetzt. In dem Verfahren gemäß Figur 2a wird sowohl die Bestimmung und Speicherung der Umschaltposition 3 als auch die Abfrage 19 nach der sicheren Verstellung in jedem Falle durchgeführt. Die Positionsbestimmung 7 kann sowohl als Teil des erfindungsgemäßen Verfahrens (Figur 2a) als auch in einer separaten Funktion (Modularisierungsprinzip) (Figur 2, nicht dargestellt) ausgeführt werden.

Die in Figuren 2 und 2a dargestellten bevorzugten Ausführungsformen der vorliegenden Erfindung stellen u. a. eine allgemeine Kontrolle dar, ob Reversiervorgänge erfolgreich ablaufen. Auch bei einer ausreichend hohen Betriebsspannung, bei der keine Verlängerung der Blockierabschaltungszeit erfolgt, wird das Verfahren so lange durchgeführt, bis eines der beiden Abschaltkriterien 12 (Blockierzähler auf Null) oder 16 (Sollposition erreicht) erfüllt ist.

In einer bevorzugten Ausführungsform der vorliegenden Erfindung wird das erfindungsgemäße Verfahren in der Nähe von mechanischen Anschlägen des elektrisch betätigbaren Aggregats abgebrochen. Fremdkraftbetriebene Fensterscheiben in Kraftfahrzeugen fahren beispielsweise gegen einen Anschlag, wenn sie vollständig geöffnet werden und gegen einen anderen, wenn sie vollständig geschlossen werden. Kurz vor dem Erreichen eines dieser beiden Anschläge ist ein Abbrechen des erfindungsgemäßen Verfahrens vorteilhaft, da der Stellantrieb der Fensterscheibe sonst Gefahr laufen würde, überlastet zu werden aufgrund der verlängerten Blockierabschaltungszeit. Ein Abbrechen des erfindungsgemäßen Verfahrens ist dabei unerheblich in Bezug auf die Einklemmgefahr. Bei einem fast vollständig geöffneten Kraftfahrzeugfenster besteht bei einer Verstellung in Öffnungsrichtung in keinem Fall eine Einklemmgefahr. Bei einem sich schließenden, fast vollständig geschlossenen Fenster sollte die Position, ab der das erfindungsgemäße Verfahren abgebrochen wird, so gewählt werden, dass der Abstand bis zum Anschlag zu gering ist, um ein Körperteil einzuklemmen.

### Bezugszeichenliste

- 1: Aktivieren des Reversiervorgangs
- 2: Verlängerung der vorgegebenen Blockierabschaltungszeit
- 3: Positionsbestimmung und -speicherung
- 4: Berechnung der Soll-Endposition
- 5: Setzen des Blockierzählers auf die Blockierabschaltungszeit
- 6: Aktivieren des Öffnungsvorgangs
- 7: Positionsbestimmung
- 8: Abfrage, ob eine Positionsänderung erfolgt ist
- 9: Positionsänderung ist erfolgt
- 10: Positionsänderung ist nicht erfolgt
- 11: Dekrementierung des Blockierzählers
- 12: Abfrage, ob der Blockierzähler auf Null steht
- 13: Blockierzähler hat die Null erreicht
- 14: Beenden des Öffnungsvorgangs
- 15: Blockierzähler hat nicht die Null erreicht
- 16: Abfrage, ob die Soll-Endposition erreicht wurde
- 17: Soll-Endposition erreicht
- 18: Soll-Endposition nicht erreicht
- 19: Abfrage, ob eine sichere Verstellung erfolgt ist
- 20: Eine sichere Verstellung ist erfolgt
- 21: Rücksetzen der vorgegebenen Blockierabschaltungszeit auf die kurze Blockierabschaltungszeit
- 22: Eine sichere Verstellung ist nicht erfolgt
- 23: Setzen des Blockierzählers auf die aktuell vorgegebene Blockierabschaltungszeit
- 24: Abfrage, ob die Betriebsspannung einen Grenzwert unterschreitet
- 25: Betriebsspannung liegt unter dem Grenzwert
- 26: Betriebsspannung liegt nicht unter dem Grenzwert
- 27: Setzen der Blockierabschaltungszeit auf die kurze Blockierabschaltungszeit t₁

## Patentansprüche

1. Verfahren zur Überwachung und Steuerung von Reversiervorgängen bei elektrisch betätigbaren Aggregaten, wobei eine Betätigungskraft zum Verstellen eines elektrisch betätigbaren Aggregats durch einen Stellantrieb ausübbar ist und eine Sicherheitsschaltung den Stellantrieb automatisch nach einer für eine Verstellung vorgegebenen Blockierabschaltungszeit abschaltet, wenn trotz angesteuertem Verstellantrieb keine Verstellung erfolgt, **dadurch gekennzeichnet, dass** ein ausgelöster Reversiervorgang vorübergehend eine Verlängerung der vorgegebenen Blockierabschaltungszeit von einer im Normalfall vorgegebenen kurzen Blockierabschaltungszeit t₁ auf eine längere Blockierabschaltungszeit t₂ (2) zur Folge hat.

2. Verfahren gemäß Anspruch 1, **dadurch gekennzeichnet, dass** eine Verlängerung der vorgegebenen Blockierabschaltungszeit von einer im Normalfall vorgegebenen kurzen Blockierabschaltungszeit t₁ auf eine längere Blockierabschaltungszeit t₂ (2) nur dann erfolgt, wenn eine Betriebsspannung, die zur Ansteuerung des Reversiervorgangs benötigt wird, einen vorgegebenen Grenzwert unterschreitet.

3. Verfahren gemäß Anspruch 1, **dadurch gekennzeichnet, dass** eine Verlängerung der vorgegebenen Blockierabschaltungszeit von einer im Grenzfall vorgegebenen kurzen Blockierabschaltungszeit t₁ auf eine längere Blockierabschaltungszeit t₂ (2) nur dann erfolgt, wenn eine Betriebsspannung zum Schalten des Stellantriebs mit Hilfe mindestens eines Relais in einem Bereich um die Relaisanzugsspannung des mindestens einen Relais liegt.

4. Verfahren gemäß Anspruch 1, **dadurch gekennzeichnet, dass** eine Verlängerung der vorgegebenen Blockierabschaltungszeit von einer im Normalbetrieb vorgegebenen kurzen Blockierabschaltungszeit t₁ auf eine längere Blockierabschaltungszeit t₂ (2) nur dann erfolgt, wenn eine Betriebsspannung zum Schalten des Stellantriebs mit Hilfe mindestens eines Relais kleiner ist als die Relaisanzugsspannung.

5. Verfahren gemäß Anspruch 1, **dadurch gekennzeichnet, dass** der Reversiervorgang einer Umkehrung eines Schließvorgangs in einen Öffnungsvorgang entspricht.

6. Verfahren gemäß Anspruch 1, **dadurch gekennzeichnet, dass** die vorgegebene Blokkierabschaltungszeit auf einem Blockierzähler abläuft (11).

7. Verfahren gemäß Anspruch 1, **dadurch gekennzeichnet, dass** die aktuelle Position des elektrisch betätigbaren Aggregats mit mindestens einem Positionssensor ermittelt (7) wird.

8. Verfahren gemäß Anspruch 7, **dadurch gekennzeichnet, dass** die mit dem Positionssensor ermittelte aktuelle Position (3) des elektrisch betätigbaren Aggregats beim Auslösen eines Reversiervorgangs (1) als Umschaltposition gespeichert wird.

9. Verfahren gemäß Anspruch 8, **dadurch gekennzeichnet, dass** die vorgegebene Blokkierabschaltungszeit auf die kurze Blockierabschaltungszeit t₁ gesetzt wird, falls mit dem Positionssensor innerhalb der vorgegebenen Blockierabschaltungszeit t₁ oder t₂ eine Verstellung von der Umschaltposition aus in der durch den Reversiervorgang angestrebten Richtung ermittelt wird.

10. Verfahren gemäß Anspruch 8, **dadurch gekennzeichnet, dass** die vorgegebene Blokkierabschaltungszeit auf die kurze Blockierabschaltungszeit t₁ gesetzt wird, falls die mit dem Positionssensor innerhalb der vorgegebenen Blockierabschaltungszeit t₁ oder t₂ ermittelte Verstellung in der durch den Reversiervorgang angestrebten Richtung gleich groß oder größer ist als eine definierte Sollverstellung ΔX.

## Claims

1. Method for monitoring and controlling reversing processes in electrically operable assemblies, it being possible for an operating force for adjusting an electrically operable assembly to be exerted by an actuating drive, and a safety circuit disconnecting the actuating drive automatically after a blocking disconnection time which is prespecified for an adjustment operation if no adjustment takes place in spite of the adjusting drive being actuated, **characterized in that** an initiated reversing process temporarily results in the prespecified blocking disconnection time being extended from a short blocking disconnection time t₁, which is prespecified in a normal case, to a longer blocking disconnection time t₂ (2).

2. Method according to Claim 1, **characterized in that** the prespecified blocking disconnection time is extended from a short blocking disconnection time t₁, which is prespecified in a normal case, to a longer blocking disconnection time t₂ (2) only when an operating voltage, which is required to actuate the reversing process, falls below a prespecified limit value.

3. Method according to Claim 1, **characterized in that** the prespecified blocking disconnection time is extended from a short blocking disconnection time t₁, which is prespecified in a limit case, to a longer blocking disconnection time t₂ (2) only when an operating voltage for switching the actuating drive with the aid of at least one relay is in a range around the relay pull-in voltage of the at least one relay.

4. Method according to Claim 1, **characterized in that** the prespecified blocking disconnection time is extended from a short blocking disconnection time t₁, which is prespecified during normal operation, to a longer blocking disconnection time t₂ (2) only when an operating voltage for switching the actuating drive with the aid of at least one relay is lower than the relay pull-in voltage.

5. Method according to Claim 1, **characterized in that** the reversing process corresponds to a reversal of a closing process into an opening process.

6. Method according to Claim 1, **characterized in that** the prespecified blocking disconnection time runs down (11) on a blocking counter.

7. Method according to Claim 1, **characterized in that** the current position of the electrically operable assembly is determined (7) by at least one position sensor.

8. Method according to Claim 7, **characterized in that** the current position (3) of the electrically operable assembly, which current position is determined by the position sensor, is stored as a changeover position when a reversing process (1) is initiated.

9. Method according to Claim 8, **characterized in that** the prespecified blocking disconnection time is set to the short blocking disconnection time t₁ if an adjustment from the changeover position in the direction intended by the reversing process is determined by the position sensor within the prespecified blocking disconnection time t₁ or t₂.

10. Method according to Claim 8, **characterized in that** the prespecified blocking disconnection time is set to the short blocking disconnection time t₁ if the adjustment in the direction intended by the reversing process, which adjustment is determined by the position sensor within the prespecified blocking disconnection time t₁ or t₂, is equal to or greater than a defined setpoint adjustment ΔX.

## Revendications

1. Procédé de surveillance et de commande d'opérations de changement de sens de rotation de machines actionnées électriquement, dans lequel une force d'actionnement peut être exercée par un entraînement de commande pour ajuster une machine actionnée électriquement et un circuit de sécurité débranche automatiquement l'entraînement de commande après une durée de débranchement de blocage prédéterminée de l'ajustement si aucun ajustement n'a eu lieu malgré que l'entraînement d'ajustement a été commandé,
**caractérisé en ce**
**qu'**une opération déclenchée de changement de sens de rotation a pour conséquence temporaire un prolongement de la durée prédéterminée de débranchement de blocage depuis une courte durée t₁ de débranchement de blocage prédéterminée pour le cas normal jusqu'à une plus longue durée t₂ (2) de débranchement de blocage.

2. Procédé selon la revendication 1, **caractérisé en ce qu'**un prolongement de la durée prédéterminée de déclenchement de blocage depuis une courte durée prédéterminée t₁ de débranchement de blocage pour le cas normal à une plus longue durée t₂ (2) de durée de blocage n'a lieu que si une tension d'alimentation nécessaire pour commander l'opération de changement de sens de rotation n'atteint pas une valeur limite prédéterminée.

3. Procédé selon la revendication 1, **caractérisé en ce qu'**un prolongement de la durée prédéterminée de déclenchement de blocage depuis une courte durée prédéterminée t₁ de débranchement de blocage pour le cas limite à une plus longue durée t₂ (2) de durée de blocage n'a lieu que si une tension d'alimentation nécessaire pour brancher l'entraînement d'ajustement à l'aide d'au moins un relais est située dans une plage qui entoure la tension d'actionnement du relais du ou des relais.

4. Procédé selon la revendication 1, **caractérisé en ce qu'**un prolongement de la durée prédéterminée de déclenchement de blocage depuis une courte durée prédéterminée t₁ de débranchement de blocage pour le cas normal à une plus longue durée t₂ (2) de durée de blocage n'a lieu que si une tension d'alimentation nécessaire pour brancher l'entraînement d'ajustement à l'aide d'au moins un relais est inférieure à la tension d'activation du relais.

5. Procédé selon la revendication 1, **caractérisé en ce que** l'opération de changement de rotation correspond à une inversion d'une opération de fermeture en une opération d'ouverture.

6. Procédé selon la revendication 1, **caractérisé en ce que** la durée prédéterminée de débranchement du blocage s'écoule sur un compteur de blocage (11).

7. Procédé selon la revendication 1, **caractérisé en ce que** la position effective de la machine actionnée électriquement est déterminée (7) à l'aide d'au moins un détecteur de position.

8. Procédé selon la revendication 7, **caractérisé en ce que** la position effective (3) déterminée par le détecteur de position de la machine actionnée électriquement est conservée en mémoire comme position de commutation lors du déclenchement d'une opération d'inversion (1).

9. Procédé selon la revendication 8, **caractérisé en ce que** la durée prédéterminée de débranchement de blocage est fixée à la courte durée t₁ de débranchement de blocage au cas où le détecteur de position a déterminé au cours des durées prédéterminées t₁ ou t₂ de débranchement de blocage le déplacement de la position de commutation dans la direction visée par l'opération d'inversion.

10. Procédé selon la revendication 8, **caractérisé en ce que** la durée prédéterminée de débranchement de blocage est fixée à la courte durée t₁ de débranchement de blocage au cas où le déplacement, déterminé par le détecteur de position au cours des durées prédéterminées t₁ ou t₂ de débranchement de blocage, dans la direction visée par l'opération d'inversion est identique ou supérieur à un déplacement défini de consigne ΔX.
